# FASCICULE DE BREVET EUROPEEN

(11) **EP 3 228 070 B1**
(45) Date de publication et mention de la délivrance du brevet: **24.06.2020**
(21) Numéro de dépôt: 15817470.6
(22) Date de dépôt: 03.12.2015
(51) Int. Cl.: G06F 9/455, H04L 29/06, H04W 4/60, H04L 29/08, G06F 16/188

(54) **PROCÉDÉ DE GESTION DE CONTENUS DANS UN RÉSEAU DE DISTRIBUTION DE CONTENUS**
VERFAHREN ZUR INHALTSVERWALTUNG IN EINEM INHALTSVERTEILUNGSNETZWERK
METHOD OF MANAGING CONTENTS IN A CONTENTS DISTRIBUTION NETWORK

(30) Priorité: 04.12.2014 FR 1461925
(43) Date de publication de la demande: 11.10.2017
(73) Titulaire: Orange, 75015 Paris (FR)
(72) Inventeur: FROMENTOUX, Gaël, 22560 Pleumeur Bodou (FR); FIEAU, Frédéric, 75013 Paris (FR); OMNES, Nathalie, 22560 Trébeurden (FR)
(86) Numéro de dépôt international: PCT/FR2015/053317
(87) Numéro de publication internationale: WO 2016/087793

(56) Documents cités:
- WO-A1-2012/168356
- WO-A2-2014/131000
- US-A1- 2010 217 869
- US-A1- 2012 317 197
- US-B1- 7 653 689

## Description

L'invention se situe dans le domaine de la distribution de contenus, et concerne plus particulièrement la gestion de ces contenus dans un réseau de distribution de contenus.

Face aux volumes importants de contenus numériques écoulés aujourd'hui sur les réseaux de télécommunications IP (Internet Protocol) et à l'augmentation massive du trafic en résultant, les opérateurs de ces réseaux ont déployé des architectures hiérarchiques et organisées pour gérer la livraison des contenus s'appuyant sur diverses ressources matérielles reliées en réseau. Par ressources matérielles on entend par exemple des espaces de stockage et des serveurs de contenus physiques déployés dans le réseau. De telles architectures sont par exemple les architectures de réseaux de distribution de contenus ou CDN (Content Delivery Network), décrites dans le document TS 182.019 intitulé « Telecommunications and Internet Converged Services and Protocols for Advanced Networking (TISPAN): Content Delivery Network (CDN) Architecture », v3.1.1 juin 2011, édité par l'ETSI. Elles s'appuient sur un ensemble collaboratif de composants comprenant notamment des serveurs dits d'origine sur lesquels les contenus sont hébergés, ainsi que des nœuds matériels « miroirs » (ex. serveurs de contenus) répartis géographiquement en bordure de réseau, et au niveau desquels les contenus sont dupliqués. Cette architecture permet de distribuer de façon transparente et efficace les contenus hébergés par les serveurs d'origine vers les utilisateurs via la définition d'un mécanisme de routage permettant à un utilisateur d'être servi par le nœud miroir du réseau le plus proche géographiquement.

On assiste par ailleurs aujourd'hui à la virtualisation (c'est-à-dire à la dématérialisation) des fonctions utilisées dans les réseaux de télécommunications, désignées par la suite par fonctions « télécoms ». Ces fonctions télécoms désignent par exemple les fonctions mises en œuvre par un cœur de réseau, une passerelle, un pare-feu, etc. Cette virtualisation est réalisée notamment par des systèmes informatiques dits en nuage, aussi plus communément désignés par « cloud », qui implémentent et hébergent ces fonctions sur des machines virtuelles accessibles par exemple par l'intermédiaire d'une application réseau. Ces machines virtuelles utilisent des ressources informatiques et réseaux matérielles distantes (ex. connectivité réseau, puissance de calcul, espaces de stockage, serveurs, applications, etc.), gérées par le système informatique en nuage, et mutualisées entre ses différents clients en fonction de leurs besoins respectifs. Les clients peuvent ainsi accéder de manière évolutive à ces ressources, sans avoir à administrer l'infrastructure sous-jacente de gestion de ces ressources qui est souvent complexe.

De nombreux travaux sont en cours actuellement dans les instances de normalisation pour encadrer cette évolution technologique majeure que constitue la virtualisation des fonctions télécoms. La livraison de contenus telle qu'elle est envisagée aujourd'hui dans les architectures de réseau CDN est également visée par cet effort. Ainsi, la livraison de contenus pourra se faire à terme non seulement à partir d'architectures matérielles de réseau CDN telles que déployées aujourd'hui, mais également à partir d'infrastructures de type « cloud ». En tirant parti des ressources virtuelles offertes par les infrastructures de type « cloud », le service CDN est destiné à évoluer vers un service dit CDaaS ou « Content Delivery as a Service » qui permettra non seulement la livraison de contenus, mais également l'accroissement des capacités offertes aujourd'hui par les infrastructures CDN en s'appuyant sur des ressources « cloud » mises à disposition des utilisateurs quasiment en temps réel.

De telles architectures de réseaux de distribution de contenus virtualisés souffrent néanmoins de certains inconvénients. Un contenu mémorisé dans ces réseaux est généralement découpé en plusieurs fragments (« chunk » en anglais) susceptibles d'être dispersés sur de multiples nœuds miroirs. Cette dispersion des fragments d'un contenu résulte par exemple de comportements utilisateurs relatifs au visionnage du contenu, ou encore à une politique de diffusion de contenus d'un fournisseur de contenus ou d'un opérateur de télécommunications du réseau de distribution mémorisant le contenu. Il est notamment fréquent que seule une partie (ou autrement dit un ensemble de fragments d'un même contenu qui se suivent, par exemple les premières minutes d'une vidéo) d'un contenu soit visionnée. On constate que les fragments correspondants à une telle partie de contenu sont généralement mémorisés dans des nœuds miroirs localisés géographiquement près des utilisateurs, tandis que les autres parties constituant le contenu demeurent par exemple au niveau de nœuds régionaux. Ces autres parties ne sont pas répliquées au niveau de nœuds miroirs du fait par exemple de demandes relatives à ces dernières moins importantes. Du fait du caractère fluctuant de la popularité d'un contenu, aussi bien quant aux parties du contenu visionnées à un instant donné qu'aux zones géographiques dans lequel un contenu ou une partie d'un contenu sont populaires à un instant donné, la dispersion des fragments du contenu peut très vite s'amplifier. Cette dispersion des contenus s'accompagne en outre d'une diminution des performances du réseau. Un nombre plus important de requêtes à destinations des nœuds miroirs peut notamment s'avérer nécessaire pour livrer un contenu fragmenté. De même une dispersion des contenus est susceptible d'entraîner une baisse de la qualité d'expérience utilisateur.

Un des buts de l'invention est de remédier à des insuffisances/inconvénients de l'état de la technique et/ou d'y apporter des améliorations.

Selon un premier aspect, l'invention concerne un procédé de gestion de contenus dans un réseau de distribution de contenus comprenant des ressources physiques aptes à héberger au moins une ressource virtualisée de livraison, ce procédé comprenant les étapes suivantes mises en œuvre par une entité de gestion d'un service de livraison de contenus :
- obtention d'un paramètre d'audience d'un contenu au niveau d'au moins une des ressources physiques apte à héberger une ressource virtualisée de livraison mémorisant au moins un fragment du contenu ;
- émission d'une commande d'adaptation d'au moins une ressource virtualisée de livraison hébergée par au moins une des ressources physiques en fonction du paramètre d'audience.

Le procédé permet ainsi une réorganisation de contenus ou de fragments d'un contenu en tirant profit d'une infrastructure de réseau virtualisé, également dite de type « cloud ». Grâce aux ressources virtuelles offertes par les infrastructures de type « cloud », les fragments de contenus sont aisément redistribués d'une ressource virtualisée de livraison vers une autre. Les ressources de livraison désignent plus particulièrement les nœuds miroirs auxquels sont notamment associés des fonctions de stockage de contenus, ou encore un mode de livraison des contenus (e.g. unicast, multicast, streaming).

Le procédé permet plus particulièrement d'ajuster l'organisation des fragments d'un contenu à un paramètre d'audience relatif au contenu. En adaptant l'organisation des fragments d'un contenu en fonction d'un paramètre d'audience de ce contenu, la qualité d'expérience utilisateur est en outre augmentée. Les temps de réponses pour la livraison de contenus en réponse à des demandes de contenus sont diminués.

De même la réorganisation des fragments dans le réseau permet de diminuer le nombre de requête de transfert de contenus entre nœuds du réseau de distribution de contenus. Il en résulte une meilleure utilisation de la bande passante.

Selon une caractéristique particulière, le procédé de gestion comprend en outre une étape d'obtention d'une répartition de fragments du contenu dans le réseau de distribution de contenus, la commande d'adaptation dépendant de la répartition de fragments.

L'obtention d'une répartition de fragments du contenu permet d'obtenir la configuration initiale des fragments du contenu, ou autrement dit leur localisation dans le réseau de distribution de contenus. La recherche des fragments du contenu le cas échéant est ainsi facilitée. En outre, l'adaptation des ressources virtualisées de livraison peut ainsi être opérée uniquement pour certains fragments du contenu plutôt que pour l'ensemble du contenu.

Selon une caractéristique particulière, le paramètre d'audience est obtenu auprès d'une entité de gestion des ressources virtualisées de livraison hébergées par les ressources physiques du réseau.

L'entité de gestion de fonctions réseaux virtualisées est par exemple une entité d'orchestration au sein d'une infrastructure de type « cloud ». Cette entité gère alors le cycle de vie des fonctions réseaux virtualisées, ces dernières étant dans le contexte de l'invention constituées par les ressources virtualisées de livraison.

L'obtention du paramètre d'audience auprès d'une telle entité permet d'éviter une interrogation de l'ensemble des ressources virtualisées de livraison existantes à un instant donné dans le réseau. Une adaptation des ressources virtualisées de livraison dans le réseau est ainsi obtenue de manière plus efficace. Une réorganisation accélérée des fragments de contenus mémorisés le cas échéant par ces ressources virtualisées de livraison est également obtenue. La fonction de gestion centralisée des ressources virtualisées de livraison assurée par l'entité de gestion de fonctions réseaux virtualisées permet en outre d'obtenir un paramètre d'audience indiquant une audience globale du contenu au sein du réseau, non limitée à une unique ressource physique du réseau.

L'obtention du paramètre d'audience par l'intermédiaire d'une entité d'orchestration permet en outre une mise en œuvre facilitée du procédé au sein des architectures connues de l'état de l'art. Aucune nouvelle interface de communication n'est en particulier nécessaire pour la mise en œuvre du procédé.

Selon une caractéristique particulière, le paramètre d'audience est directement obtenu auprès des ressources virtualisées de livraison.

L'obtention de la répartition des fragments de contenus directement auprès d'une ressource de livraison peut être réalisée en temps réel. La réorganisation des fragments de contenus en fonction de l'audience des contenus est ainsi accélérée. Le temps de traitement de demandes clientes relatives aux contenus bénéficie également de la réorganisation des fragments de contenus, ce qui se traduit notamment par une hausse de la qualité d'expérience utilisateur.

Selon une caractéristique particulière, le paramètre d'audience correspond à une politique de diffusion du contenu déterminée par le fournisseur du contenu et/ou l'opérateur du réseau de distribution de contenus.

La politique de diffusion permet d'obtenir une information relative à la popularité d'un contenu connue par exemple du fournisseur de ce contenu ou de l'opérateur du réseau de distribution de contenus. Il peut s'agir par exemple d'une popularité déterminée à partir d'une popularité constatée du contenu lors de sa diffusion dans d'autres réseaux de distribution de contenus. La politique de diffusion peut également permettre de traduire une politique d'un fournisseur de contenus quant à la distribution de ses contenus. L'adaptation d'une ressource virtualisée peut ainsi avantageusement résulter d'une politique de promotion d'un contenu dans une zone géographique dans laquelle est localisée la ressource physique. L'adaptation peut également résulter du retrait par le fournisseur de contenu lui-même d'un contenu dont par exemple la popularité est connue faible en dehors du réseau.

Le procédé permet ainsi de prendre en compte non seulement une popularité des contenus mesurée au sein du réseau, mais également une popularité des contenus à l'extérieur du réseau de distribution de contenus. L'adaptation des ressources virtualisées est affinée et permet d'anticiper des évolutions d'audience relatives aux contenus.

La politique de diffusion peut également indiquer des restrictions ou conditions à remplir (e.g. un nombre de visualisation maximum, un délai de visualisation, des droits de visualisation, etc.) sur les contenus prises en compte lors de l'obtention du paramètre d'audience. L'adaptation de la ressource virtualisée est ainsi avantageusement différenciée en fonction par exemple d'un niveau de service relatif à la distribution d'un contenu. Des exigences de qualité de service d'un fournisseur de contenus peuvent ainsi être prises en compte lors de l'adaptation. Une affectation de ressources de livraison pour un service de distribution de contenus d'un fournisseur de contenus donné peut notamment être évitée lorsque ce fournisseur requiert par exemple une qualité de service de faible qualité. De même un fournisseur de contenus requérant une qualité de service élevée se verra par exemple proposer prioritairement de nouvelles ressources virtualisées de livraison.

Selon une caractéristique particulière, l'émission de la commande d'adaptation est à destination d'une entité de gestion des ressources virtualisées de livraison hébergées par les ressources physiques du réseau, l'entité de gestion émettant au moins une commande d'adaptation vers au moins une ressource physique hébergeant une ressource virtualisée identifiée dans la commande d'adaptation.

L'émission de la commande d'adaptation auprès d'une entité de gestion de fonctions réseaux virtualisées permet d'éviter une émission vers l'ensemble des ressources virtualisées de livraison existantes à un instant donné dans le réseau. La fonction de gestion centralisée des ressources virtualisées de livraison assurée par l'entité de gestion de fonctions réseaux virtualisées permet en outre une adaptation simultanée de l'ensemble des ressources virtualisées de livraison hébergées par une même ressource physique.

De même qu'indiqué précédemment, l'émission de la commande d'adaptation par l'intermédiaire d'une telle entité permet en outre une mise en œuvre facilitée du procédé au sein des architectures connues de l'état de l'art. Aucune nouvelle interface de communication n'est en particulier nécessaire pour la mise en œuvre du procédé.

Selon une caractéristique particulière, le paramètre d'audience est relatif à un nombre d'accès au contenu, l'adaptation d'une ressource virtualisée comprenant la mémorisation par une ressource virtualisée d'un ensemble de fragments du contenu lorsque le paramètre d'audience indique un nombre d'accès au contenu supérieur à un seuil de popularité.

Le procédé permet ainsi de regrouper ensemble des fragments d'un contenu quand un contenu est identifié populaire (paramètre d'audience indiquant une audience élevée). L'utilisation des ressources virtualisées de livraison est optimisée en fonction de l'audience indiquée par le paramètre d'audience.

Selon une caractéristique particulière, lorsqu'un fragment de l'ensemble de fragments du contenu est mémorisé par une autre ressource virtualisée de livraison, l'adaptation comprend la suppression dudit fragment sur l'autre ressource virtualisée de livraison.

Le procédé permet ainsi de libérer des ressources de stockage en supprimant les fragments redondants d'un même contenu.

Selon une caractéristique particulière, la commande d'adaptation identifiant une ressource physique n'hébergeant pas de ressource virtualisée mémorisant un fragment du contenu, l'adaptation de la ressource virtualisée comprend en outre la création d'une ressource virtualisée hébergée par la ressource physique, la ressource virtualisée mémorisant l'ensemble de fragments dudit contenu.

Le procédé permet ainsi de regrouper un ensemble des fragments d'un contenu populaire dans des régions où il n'est pas encore mémorisé. C'est en particulier le cas quand on anticipe qu'un contenu devienne populaire dans une région donnée.

Selon une caractéristique particulière, le paramètre d'audience est relatif à un nombre d'accès au contenu, l'adaptation de la ressource virtualisée consistant en la suppression des fragments du contenu mémorisés sur la ressource virtualisée lorsque le paramètre d'audience indique un nombre d'accès au contenu inférieur à un seuil d'impopularité.

Une baisse de popularité peut ainsi être prise en compte dans l'affectation des ressources virtualisées de livraison mises à disposition par exemple d'un fournisseur de contenus particulier. La suppression d'une ressource virtualisée de livraison permet de libérer des ressources du réseau de distribution de contenus. Les ressources du réseau de distribution sont ainsi utilisées de manière optimisée en fonction de l'évolution de la popularité des contenus.

Selon un deuxième aspect l'invention concerne une entité de gestion d'un service de livraison de contenus, dans un réseau de distribution de contenus comprenant des ressources physiques aptes à héberger au moins une ressource virtualisée de livraison. L'entité comprend :
- un premier module d'émission/réception, agencé pour obtenir un paramètre d'audience d'un contenu au niveau d'une des ressources physiques apte à héberger une ressource virtualisée de livraison mémorisant au moins un fragment du contenu ;
- un module de calcul, agencé pour générer une commande d'adaptation d'au moins une ressource virtualisée de livraison hébergée par au moins une des ressources physiques en fonction du paramètre d'audience ;
- un premier module d'émission, agencé pour émettre la commande d'adaptation d'au moins une ressource virtualisée de livraison hébergée par au moins une des ressources physiques en fonction du paramètre d'audience.

Selon une caractéristique particulière, l'entité de gestion d'un service de livraison de contenus comprend en outre un deuxième module d'émission/réception, agencé pour obtenir une répartition de fragments d'un contenu dans le réseau de distribution de contenus. Le module de calcul est alors agencé pour générer la commande d'adaptation d'au moins une ressource virtualisée de livraison hébergée par au moins une des ressources physiques en fonction du paramètre d'audience et de la répartition de fragments.

Les avantages énoncés pour l'une quelconque des caractéristiques du procédé de gestion selon le premier aspect sont directement transposables à l'entité de gestion d'un service de livraison de contenus selon le deuxième aspect.

Selon un troisième aspect, l'invention propose un système de gestion de contenus, dans un réseau de distribution de contenus comprenant des ressources physiques aptes à héberger au moins une ressource virtualisée de livraison. Le système comprend :
- une entité de gestion d'un service de livraison de contenus selon le deuxième aspect ;
- une entité de gestion des ressources virtualisées de livraison hébergées par les ressources physiques du réseau comprenant un module d'émission/réception, agencé pour envoyer un paramètre d'audience à l'entité de gestion d'un service de livraison de contenus et pour recevoir une commande d'adaptation d'au moins une ressource virtualisée de livraison hébergée par au moins une des ressources physiques.

Selon un quatrième aspect, l'invention concerne également un programme pour une entité de gestion d'un service de livraison de contenus, comprenant des instructions de code de programme destinées à commander l'exécution des étapes du procédé précédemment décrit, lorsque ledit programme est exécuté par ladite entité et un support d'enregistrement lisible par une entité de gestion d'un service de livraison de contenus sur lequel est enregistré un tel programme..

L'invention sera mieux comprise à l'aide de la description suivante de modes de réalisation particuliers, en référence aux dessins annexés sur lesquels :
- la figure 1a et 1b représentent un système de gestion de contenus selon deux modes particuliers de réalisation ;
- les figures 2a et 2b représentent des étapes d'un procédé de gestion selon deux modes particuliers de réalisation ;
- la figure 3 représente des étapes d'un procédé de gestion pour la génération d'une commande d'adaptation selon un mode particulier de réalisation ;
- la figure 4 représente une entité de gestion d'un service de livraison de contenus selon un mode particulier de réalisation.

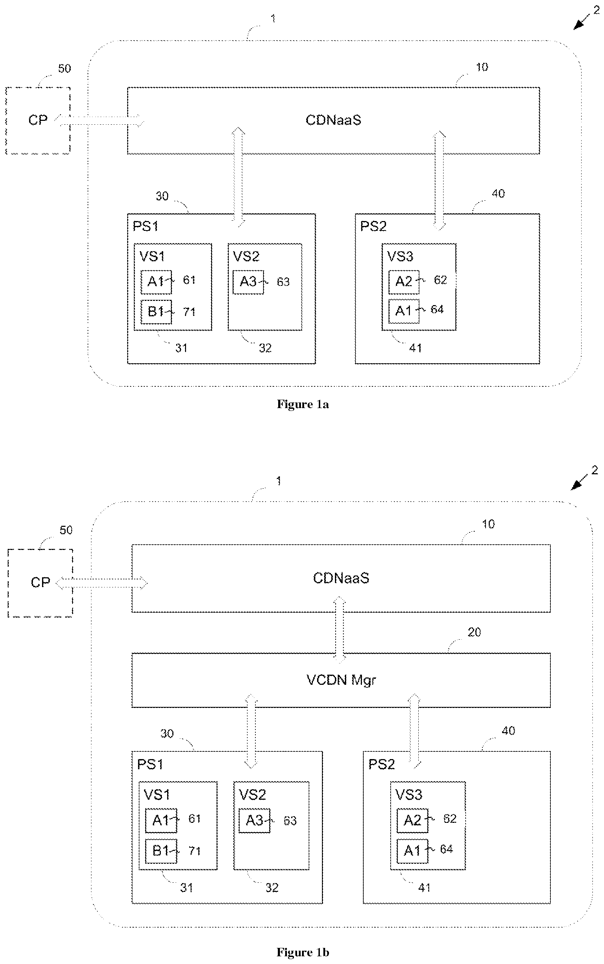

Les **figures 1a et 1b** représentent un système 1 de gestion de contenus dans un réseau de distribution de contenus 2 selon deux modes de réalisation distincts. Le système 1 propose plus particulièrement une infrastructure en tant que service, fournissant un service de livraison de contenus, mis en œuvre par un ensemble de ressources virtualisées de livraison 31, 32 et 41.

Dans un premier mode de réalisation décrit en relation avec la **figures 1a****,** le système 1 est uniquement constitué d'une entité de gestion d'un service de livraison 10 et de ressources physiques 30 et 40 aptes à héberger les ressources virtualisées de livraison 31, 32 et 41.

Les ressources physiques 30 et 40 permettent de servir des entités clientes requérants un contenu, lorsque ces entités clientes sont situées dans une région desservie par l'une de ces ressources physiques 30 et 40 (typiquement la région où est localisée la ressource physique en question) dans le réseau de distribution de contenus 2. Les ressources physiques constituent les nœuds miroirs du réseau de distribution de contenus 2. Dans le mode de réalisation décrit en relation avec la figure la, la ressource physique 30 héberge les deux ressources virtualisées de livraison 31 et 32. La ressource physique 40 héberge une unique ressource virtualisée 41.

Les ressources virtualisées de livraison 31, 32 et 41 mettent en œuvre des fonctions réseaux virtualisées (en anglais VNF pour *Virtual Network Functions*) telles que définies dans le document de spécification de l'ETSI « GS NFV 003 v1.1.1 » d'octobre 2013. Ces fonctions réseaux virtualisées sont plus particulièrement des fonctions réseaux virtualisées de livraison de contenus. Chacune de ces ressources virtualisées de livraison 31, 32 et 41 peut mémoriser au moins un fragment de contenu. A titre d'exemple, la ressource virtualisée 31 mémorise un fragment A1 61 d'un contenu A et un fragment B1 71 d'un contenu B, la ressource virtualisée 32 mémorise un fragment A3 63 du contenu A, et la ressource virtualisée 41 mémorise les fragments A2 62 et A1 64 du contenu A.

Les ressources physiques 30 et 40, de mêmes que les ressources virtualisées de livraison 31, 32 et 41 sont par exemple affectées à un tiers 50 utilisant les services fournis par le système 1. Ce tiers 50 est à titre d'exemple un fournisseur de contenus ou un opérateur de réseau de communications. Dans un autre mode de réalisation, les ressources tant physiques que virtuelles peuvent également être attribuées à plusieurs tiers, auquel cas chaque ressource est soit une ressource dédiée à un tiers donné, soit une ressource mutualisée entre plusieurs tiers.

L'entité de gestion d'un service de livraison de contenus 10 assure le déploiement et la gestion des ressources virtualisées de livraison 31, 32 et 41. Cette entité 10 est par exemple un contrôleur d'un réseau de distribution de contenus. Elle permet notamment d'adapter les ressources virtualisées de livraison de contenus 31, 32 et 41 en fonction d'un paramètre d'audience (ceci sera détaillé ultérieurement en relation avec le procédé de gestion). Cette adaptation est le cas échéant réalisée en fonction du ou des tiers auxquels des ressources virtualisées ont été attribuées. L'entité 10 commande notamment à l'infrastructure de réseau virtuel qui lui est sous-jacente les adaptations de ressources virtuelles nécessaires à la fourniture d'un service de livraison optimisé. L'entité 10 communique pour cela directement avec les ressources physiques 30 et 40 du réseau de distribution de contenus 2, et peut de ce fait accéder directement aux ressources virtualisées de livraison 31, 32 et 41.

Dans encore un autre mode de réalisation, l'entité de gestion d'un service de livraison de contenus 10 communique également avec un tiers 50 (e.g. un fournisseur de contenus). Ceci permet notamment à l'entité de gestion d'un service de livraison de contenus 10 de prendre en compte une politique de diffusion d'un contenu lorsqu'elle met en œuvre sa fonction d'adaptation des ressources virtualisées de livraison 31, 32 et 41.

La **figure 1b** présente un deuxième mode de réalisation du système 1 de gestion de contenus. Dans ce deuxième mode de réalisation, le système 1 de gestion de contenus comprend, en plus de l'entité de gestion d'un service de livraison de contenus 10 et des ressources physiques 30 et 40 aptes à héberger les ressources virtualisées de livraison 31, 32 et 41, une entité de gestion de ressources virtualisées de livraison 20. Cette dernière entité 20 fait partie de l'infrastructure de réseau virtuel dont l'entité de gestion d'un service de livraison 10 utilise les services. Dans ce deuxième mode de réalisation, pour gérer les ressources virtualisées de livraison 31, 32 et 41 hébergées par les ressources physiques 30 et 40, l'entité de gestion 10 ne communique pas directement avec les ressources physiques 30 et 40, mais avec l'entité de gestion de ressources virtualisées de livraison 20.

L'entité 20 permet d'obtenir de manière centralisée des informations relative à l'ensemble des ressources virtualisées de livraison 31, 32 et 41, et de les transmettre à l'entité de gestion d'un service de livraison de contenus 10. Cette entité de gestion de ressources virtualisées de livraison est par exemple une entité d'orchestration (en anglais *orchestrator*) ou encore un gestionnaire de fonctions réseaux virtualisées (en anglais *VNF Manager*). L'entité de gestion de ressources virtualisées de livraison 20 permet notamment d'éviter une interrogation systématique de l'ensemble des ressources virtualisées de livraison existantes à un instant donné dans le réseau. L'entité de gestion de ressources virtualisées de livraison 20 permet en outre de corréler les informations obtenues depuis les ressources virtualisées de livraison 31, 32 et 41 avant de les transmettre à l'entité de gestion d'un service de livraison de contenus 10.

Il est par ailleurs à noter que les modes de réalisation décrits en relation avec les figures 1a et 1b sont des représentations simplifiées du système 1 afin d'en faciliter la compréhension. Aucune limitation n'est attachée au nombre de ressources physiques 30 et 40. De même, aucune limitation n'est attachée au nombre de ressources virtualisées de livraison 31, 32 et 41 hébergées par les ressources physiques 30 et 40. Inversement, une ressource virtualisée de livraison peut également être répartie sur plusieurs ressources physiques, auquel cas il n'existe pas non plus de limitation attachée au nombre de ressources physiques supportant cette ressource virtualisée de livraison. Le nombre de fragments de contenus mémorisé par une ressource virtualisée n'est quant à lui limité que par les capacités de stockage associées à cette ressource.

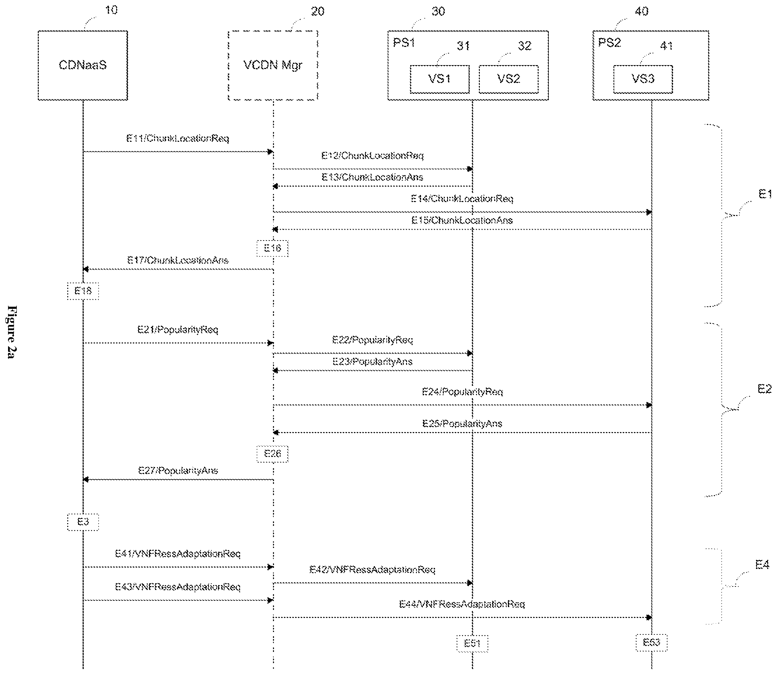

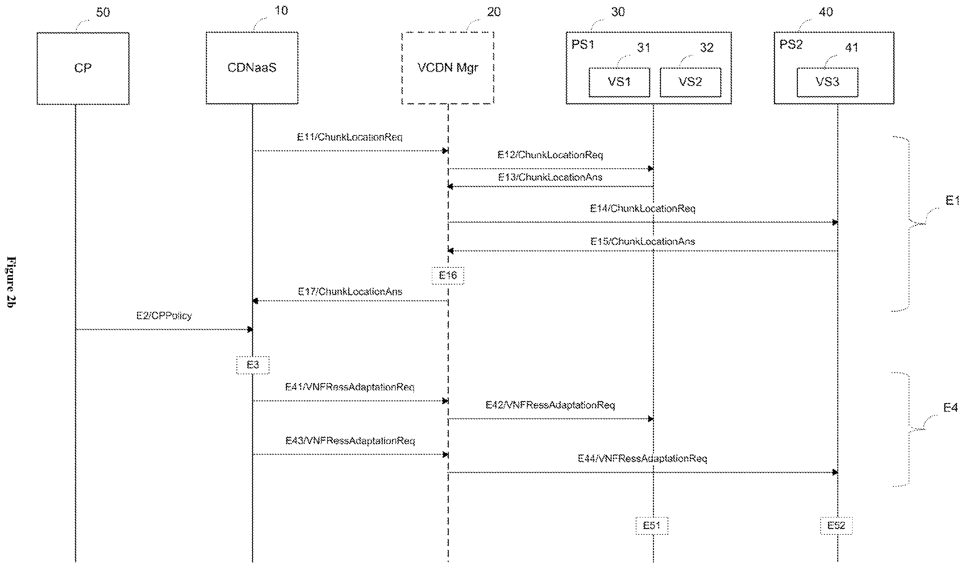

Les **figures 2a** **et** **2b** décrivent les étapes d'un procédé de gestion selon deux modes particuliers de réalisation. Ces deux modes de réalisation diffèrent par leur mode d'obtention d'un paramètre d'audience. Dans le premier mode de réalisation décrit en relation avec la figure 2a, le paramètre d'audience est obtenu auprès des ressources physiques 30 et 40. Dans le deuxième mode de réalisation décrit en relation avec la figure 2b, le paramètre d'audience est obtenu auprès d'un fournisseur de contenus 50.

Le premier mode de réalisation va maintenant être décrit en relation avec la **figure 2a****.** A titre illustratif, on considère ici un contenu A et un contenu B mémorisés au niveau de ressources physiques 30 et 40, tel que décrit précédemment en relation avec la figure 1b, c'est-à-dire dont le fragment A1 est mémorisé par les ressources virtualisées de livraison 31 et 41, le fragment A2 est mémorisé uniquement par la ressource virtualisée de livraison 41, le fragment A3 est mémorisé uniquement par la ressource virtualisée de livraison 32 et le fragment B1 est mémorisé uniquement par la ressource virtualisée de livraison 31.

Dans une étape E1, l'entité de gestion d'un service de livraison de contenus 10 obtient auprès des ressources physiques 30 et 40 une répartition des fragments de contenus dans le réseau de distribution de contenus 2. La répartition des fragments de contenus est par exemple une liste L1 d'identifiants des fragments de contenus, respectivement associés à au moins un couple constitué d'un identifiant d'une ressource virtualisée mémorisant le fragment et d'un identifiant de la ressource physique hébergeant la ressource virtualisée. Cette étape permet d'obtenir une cartographie des fragments de contenus mémorisés dans le réseau de distribution de contenus 2.

L'étape E1 est plus particulièrement constituée des sous-étapes E11-E18.

Lors de la sous-étape E11, l'entité de gestion d'un service de livraison de contenus 10 envoie une requête d'obtention d'une répartition des fragments de contenus dans le réseau de distribution de contenus 2, à une entité de gestion de ressources virtualisées de livraison 20. L'entité de gestion de ressources virtualisées 20 est à titre d'exemple un dispositif d'orchestration d'une infrastructure de réseau virtuelle comprenant les ressources virtualisées 31, 32 et 41 hébergées par les ressources physiques 30 et 40.

L'entité de gestion de ressources virtualisées de livraison 20 transfère ensuite la requête d'obtention de répartition à destination de l'ensemble des ressources physiques 30 et 40 du réseau de distribution de contenus 2.

Plus précisément, l'entité de gestion de ressources virtualisées de livraison 20 transfère, lors de la sous-étape E12, la requête de répartition à la ressource physique 30. Cette dernière héberge les ressources virtualisées de livraison VS1 31 et VS2 32 qui mémorisent respectivement les fragments A1 61 et B1 71, et A3 63 des contenus A et B.

Lors de la sous-étape E13, la ressource physique 30 retourne à l'entité de gestion de ressources virtualisées de livraison 20, en réponse à la requête, une liste de trois couples (A1 ; (VS1 ; PS1)) (B1 ; (VS1 ; PS1)) et (A3 ; (VS2 ; PS1) associant les identifiants des fragments A1, B1, et A3 aux identifiants de ressource physique PS1 et virtualisée de livraison VS1 mémorisant ces fragments. Le couple (A1 ; (VS1 ; PS1)) indique ainsi que le fragment A1 61 est mémorisé par la ressource virtualisée de livraison VS1 31 hébergée par la ressource physique PS1 30. Le couple (B1 ; (VS1 ; PS1)) indique que le fragment B1 71 est mémorisé par la ressource virtualisée de livraison VS1 31 hébergée par la ressource physique PS1 30. De même, le couple (A3 ; (VS2 ; PS1)) indique que le fragment A3 63 est mémorisé par la ressource virtualisée de livraison VS2 32 hébergée par la ressource physique PS1 30.

Lors de la sous-étape E14, de même que précédemment décrit pour la sous-étape E12, l'entité de gestion de ressources virtualisées de livraison 20 transfère la requête d'obtention de répartition à la ressource physique 40. Cette dernière héberge une ressource de livraison VS3 41 qui mémorise deux fragments A1 64 et A2 62 du contenu A.

Lors de la sous-étape E15, de même que précédemment décrit pour la sous-étape E13, la ressource physique 40 retourne à l'entité de gestion de ressources virtualisées de livraison 20, en réponse à la requête, une liste de deux couples (A1 ; (VS3 ; PS2)) et (A2 ; (VS3 ; PS2). Le couple (A1 ; (VS3 ; PS2)) indique que le fragment A1 64 est mémorisé par la ressource virtualisée de livraison VS3 41 hébergée par la ressource physique PS2 40. De même, le couple (A2 ; (VS3 ; PS2)) indique que le fragment A2 62 est mémorisé par la ressource virtualisée de livraison VS3 41 hébergée par la ressource physique PS2 40.

Lors de la sous-étape E16, l'entité de gestion de ressources virtualisées de livraison 20 agrège les informations de répartition des fragments de contenus obtenues auprès des ressources physiques 30 et 40, afin d'établir la liste L1 décrivant la répartition des fragments de contenus dans le réseau de distribution de contenus 2. La liste L1 indique ainsi la localisation des fragments du contenu A et du contenu B dans le réseau de distribution de contenus 2 et peut se présenter sous la forme suivante :

| |
|---|
| A1 ; (VS1, PS1) ; (VS3, PS2) |
| A2 ; (VS3, PS2) |
| A3 ; (VS2, PS1) |
| B1 ; (VS1, PS1) |

L'entité de gestion de ressources virtualisées de livraison 20 transmet ensuite, lors de la sous-étape E17, la répartition de fragments de contenus (i.e. la liste L1), à l'entité de gestion d'un service de livraison de contenus 10, qui peut alors mémoriser cette liste L1.

Cette liste L1 est ensuite mise à jour en identifiant les contenus auxquels appartiennent les fragments indiqués dans la liste L1 et en associant un identifiant de contenu aux identifiants de fragments dans la liste L1.

Pour ce faire, lors d'une sous-étape E18 d'identification des contenus, l'entité de gestion d'un service de livraison de contenus 10 envoie une requête comprenant les identifiants de fragments de la répartition de fragments à destination d'un dispositif du réseau de distributions de contenus 2 permettant d'identifier les contenus auxquels appartiennent ces fragments. Ce dispositif est par exemple un serveur de base de données géré par l'opérateur de réseau de distribution de contenus 2 ou encore par un partenaire tiers de l'opérateur, mémorisant la liste d'identifiants de fragments associée à un identifiant de contenu. A l'issue de cette sous-étape chaque fragment est ainsi associé au contenu auquel il appartient, et sa localisation ou ses localisations dans le réseau de distribution de contenus identifiées. La liste L1 est mise à jour afin de refléter cette association :

| | |
|---|---|
| A | A1 ; (VS1, PS1) ; (VS3, PS2) |
| A | A2 ; (VS3, PS2) |
| A | A3 ; (VS2, PS1) |
| B | B1 ; (VS1, PS1) |

Alternativement, cette sous-étape E18 d'identification des contenus peut être effectuée par l'entité de gestion de ressources virtualisées de livraison 20, laquelle se charge de mettre à jour la liste L1 avec les identifiants des contenus A, B obtenus auprès du dispositif permettant d'identifier les contenus auxquels appartiennent les fragments, avant de transmettre cette liste mise à jour à l'entité de gestion d'un service de livraison de contenus 10.

Dans une étape E2, l'entité de gestion d'un service de livraison de contenus 10 obtient auprès des ressources physiques 30 et 40 un paramètre d'audience du contenu A. Le paramètre d'audience est à titre d'exemple un nombre de requêtes d'accès au contenu A associé à chaque ressource physique 30 et 40. Le nombre de requête d'accès est par exemple incrémenté à réception par une ressource physique d'une requête d'accès à l'un des fragments du contenu A reçue d'une entité cliente. Le nombre de requêtes d'accès au contenu A pour la ressource physique 30 (respectivement pour la ressource physique 40) indique ainsi un niveau de popularité de ce contenu A dans la région desservie par cette ressource physique 30 (respectivement par la ressource physique 40), i.e. dans la région correspondant à la localisation de cette ressource physique 30 dans le réseau de distribution de contenus 2.

L'étape E2 comprend plus particulièrement un ensemble de sous-étapes E21-E27.

Lors de la sous-étape E21, l'entité de gestion d'un service de livraison de contenus 10 transmet une requête d'obtention d'un paramètre d'audience du contenu A dans le réseau de distribution de contenus 2, à une entité de gestion de ressources virtualisées de livraison 20.

L'entité de gestion de ressources virtualisées de livraison 20 transfère ensuite cette requête, afin d'obtenir le paramètre d'audience du contenu A, à destination des ressources physiques 30 et 40.

Plus précisément, l'entité de gestion de ressources virtualisées de livraison 20 transfère, lors de la sous-étape E22, la requête d'obtention du paramètre d'audience du contenu A à la ressource physique 30.

Lors de la sous-étape E23, la ressource physique 30 retourne à l'entité de gestion de ressources virtualisées de livraison 20, en réponse à cette requête, le nombre de requêtes d'accès au contenu A qu'elle a reçues. A titre d'exemple, la ressource physique 30 envoie à l'entité de gestion de ressources virtualisées de livraison 20, un paramètre d'audience pa1 = 105000, indiquant que le contenu A a été requis 105000 fois auprès de la ressource 30.

Lors de la sous-étape E24, de même que précédemment décrit pour la sous-étape E22, l'entité de gestion de ressources virtualisées de livraison 20 transfère la requête d'obtention du paramètre d'audience du contenu A à la ressource physique 40.

Lors de la sous-étape E25, de même que précédemment décrit pour la sous-étape E23, la ressource physique 40 retourne à l'entité de gestion de ressources virtualisées de livraison 20, en réponse à cette requête, le nombre de requêtes d'accès au contenu A qu'elle a reçues. A titre d'exemple, la ressource physique 40 envoie à l'entité de gestion de ressources virtualisées de livraison 20, un paramètre d'audience pa2 = 100, indiquant que le contenu A a été requis 100 fois auprès de la ressource 40.

Lors de la sous-étape E26, l'entité de gestion de ressources virtualisées de livraison 20 réunit les informations relatives à l'audience du contenu A obtenues auprès des ressources physiques 30 et 40, afin d'établir une liste L2 qui peut se présenter à titre d'exemple sous la forme suivante :
L2 = { (PS1, 105000) ; (PS2, 100) }

Les couples (PS1, 105000) et (PS2, 100) indiquent respectivement que le contenu A a été accédé 105000 fois au niveau de la ressource physique PS1 30, et 100 fois au niveau de la ressource physique PS2 40.

Lors de la sous-étape E27, cette liste L2 est envoyée par l'entité de gestion de ressources virtualisées de livraison 20 à l'entité de gestion d'un service de livraison de contenus 10.

Cette dernière sous-étape E27 termine l'étape E2 du procédé de gestion. L'entité de gestion d'un service de livraison de contenus 10 mémorise alors deux listes L1 et L2 correspondant respectivement à une répartition du contenu A dans le réseau de distribution de contenus 2 et à un paramètre d'audience de ce contenu A mesuré au niveau des ressources physiques 30 et 40.

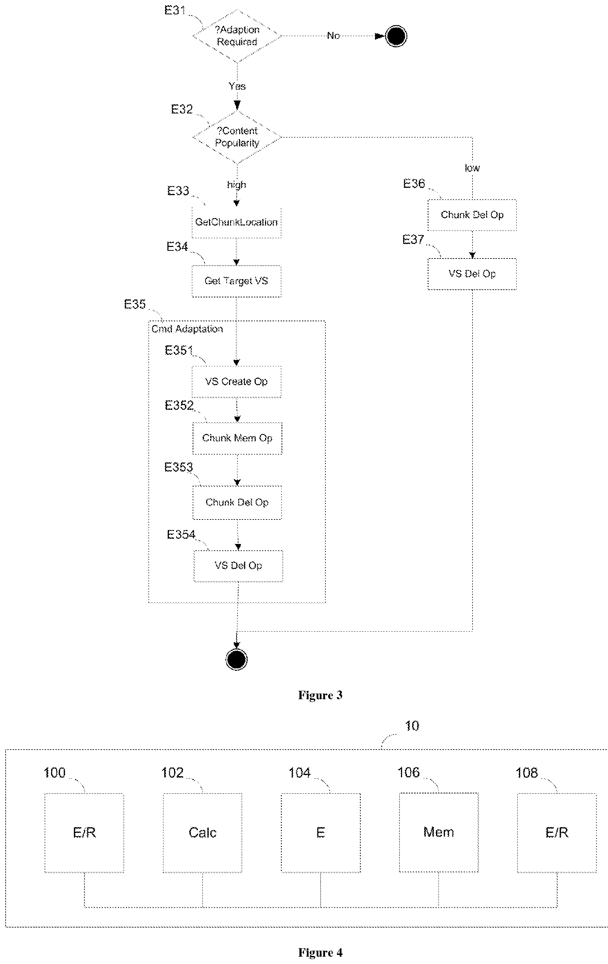

Lors d'une étape E3, l'entité de gestion d'un service de livraison de contenus 10 détermine et génère le cas échéant en fonction notamment du paramètre d'audience obtenu lors de l'étape E2, des commandes d'adaptation de ressources virtualisées de livraison hébergées respectivement par les ressources physiques 30 et 40. Les étapes de génération d'une commande d'adaptation seront détaillées ultérieurement en relation avec la figure 3.

A titre d'exemple, on suppose dans le présent mode de réalisation que deux commandes d'adaptation sont générées : une commande C1 d'adaptation des ressources virtualisées de livraison hébergées par la ressource physique PS1 30, pour le contenu A déterminé comme étant populaire au niveau de cette ressource physique PS1 30, et une commande C2 d'adaptation des ressources virtualisées de livraison hébergées par la ressource physique PS2 40, pour le contenu A déterminé comme étant impopulaire au niveau de cette ressource physique PS2 40.

Dans une étape E4, l'entité de gestion d'un service de livraison 10 émet une commande d'adaptation des ressources virtualisées de livraison hébergées par les ressources physiques du réseau de distribution de contenus 2. Cette étape E4 est plus particulièrement constituée des sous-étapes E41-E44.

Lors de la sous-étape E41 (respectivement E43), l'entité de gestion d'un service de livraison de contenus 10 transmet la commande C1 (respectivement C2) d'adaptation à l'entité de gestion de ressources virtualisées de livraison 20.

Puis lors de la sous-étape E42 (respectivement E44), l'entité de gestion de ressources virtualisées de livraison 20 transmet ensuite cette commande C1 (respectivement C2) d'adaptation à destination de la ressource physique PS1 30 (respectivement PS2 40).

Lors d'une étape E51, les ressources virtualisées de livraison 31 et 32 hébergées par la ressource physique PS1 30 sont adaptées conformément à la commande d'adaptation C1, en appliquant une ou plusieurs opérations comprises dans cette commande C1 telles qu'illustrées plus loin. A titre d'exemple, à l'issue de cette adaptation, la ressource virtualisée de livraison VS2 32 est supprimée et la ressource virtualisée de livraison VS1 31 mémorise les fragments de contenus A1 61, A2 62, A3 63 et B1 71.

De même, lors d'une étape E52, la ressource virtualisée de livraison 41 hébergée par la ressource physique PS2 40 est adaptée conformément à la commande d'adaptation C2, en appliquant une ou plusieurs opérations comprises dans cette commande C2 telles qu'illustrées plus loin. A titre d'exemple, à l'issue de cette adaptation, la ressource virtualisée de livraison VS3 41 est supprimée.

Cette dernière étape met fin au procédé de gestion.

Il est à noter que le procédé n'impose aucun ordre quant à l'exécution des étapes E1 et E2 qui précèdent l'étape E3.

Dans un autre mode de réalisation, le paramètre d'audience est ventilé par ressource virtualisée de livraison. Il s'agit alors d'un nombre d'accès à un contenu pour une ressource virtualisée particulière hébergée par une ressource physique donné. Dans ce mode de réalisation, lors de la sous-étape E23, la ressource physique 30 retourne en réponse à l'entité de gestion de ressources virtualisées de livraison 20, le nombre de requêtes d'accès au contenu A qu'elle a reçues pour chaque ressource virtualisée de livraison 31 et 32 qu'elle héberge. A titre d'exemple, la ressource physique 30 envoie à l'entité de gestion de ressources virtualisées de livraison 20, un paramètre d'audience pa11 = 105000, indiquant que le contenu A a été accédé 105000 fois au niveau de la ressource virtualisée de livraison 31, et un paramètre d'audience pa12 = 104000, indiquant que le contenu A a été accédé 104000 fois au niveau de la ressource virtualisée de livraison 32. De même, lors de la sous-étape E25, la ressource physique 40 retourne, à titre d'exemple à l'entité de gestion de ressources virtualisées de livraison 20, un paramètre d'audience pa21 = 100, indiquant que le contenu A a été accédé 100 fois au niveau de la ressource virtualisée de livraison 41. La liste L2 obtenue lors de la sous-étape E26, se présente à titre d'exemple sous la forme suivante :
L2 = { (VS1, PS1, 105000) ; (VS2, PS1, 104000) ; (VS3, PS2, 100) }

Les couples (VS1, PS1, 105000), (VS2, PS1, 104000) et (VS3, PS2, 100) indiquent respectivement que le contenu A a été accédé 105000 fois au niveau de la ressource virtualisée de livraison VS1 31 hébergée par la ressource physique PS1 30, 104000 fois au niveau de la ressource virtualisée de livraison VS2 32 hébergée par la ressource physique PS1 30, et 100 fois au niveau de la ressource virtualisée de livraison VS3 41 hébergée par la ressource physique PS2 40. Un critère plus fin pour le déclenchement d'une adaptation des ressources virtualisées d'une ressource physique est ainsi possible.

Dans un autre mode de réalisation, la répartition de fragments et le paramètre d'audience du contenu A sont obtenus lors d'une même étape. Les sous-étapes E11 et E21 (respectivement E12 et E22, ainsi que E14 et E24) sont alors réunies en une étape comportant la transmission d'une unique requête d'obtention de la répartition et du paramètre d'audience. Il en est de même pour les sous-étapes de réponses E17 et E27 (respectivement E13 et E23, ainsi que E15 et E25), dans lesquelles les informations relatives à la répartition de fragments du contenu A sont retournées en même temps que le paramètre d'audience du contenu A. De même, les sous-étapes E16 et E26 sont mises en œuvre dans une seule et même étape permettant d'obtenir une liste L comportant à la fois les informations de répartition de fragments et d'audience du contenu A. A titre d'exemple, dans ce mode de réalisation la liste L peut présenter la forme suivante :

| | |
|---|---|
| A | A1 ; (VS1, PS1, 105000) ; (VS3, PS2, 10) |
| A | A2 ; (VS3, PS2, 10) |
| A | A3 ; (VS2, PS1, 105000) |

On remarquera que dans ce mode de réalisation également, le nombre d'accès peut aisément être ventilé par ressource virtualisée de livraison ou par ressource physique.

Dans un autre mode de réalisation correspondant à la figure la, le procédé ne met pas en œuvre l'entité de gestion de ressources virtualisées de livraison 20. Les requêtes émises par l'entité de gestion d'un service de livraison 10 sont alors directement envoyées aux ressources physiques 30 et 40. Ces dernières répondent de même directement à l'entité de gestion d'un service de livraison 10. Le procédé peut ainsi avantageusement être mis en œuvre avec une infrastructure de réseau virtuelle existante sans nécessité de dispositif d'orchestration spécifique.

Dans encore un autre mode de réalisation l'entité de gestion de ressources virtualisées de livraison 20 n'est mise en œuvre que pour une ou plusieurs étapes parmi les étapes d'obtention d'une répartition de fragments d'un contenu, d'obtention d'un paramètre d'audience d'un contenu ou d'émission d'une commande d'adaptation de ressources virtualisées de livraison. Les autres étapes sont alors réalisées par interrogation directe des ressources physiques 30 et 40 par l'entité de gestion d'un service de livraison 10. Cette interrogation directe des ressources physiques permet notamment d'obtenir des informations de répartition d'un contenu en temps réel. Le dispositif d'orchestration 20 n'est en outre pas systématiquement sollicité pour l'ensemble des étapes du procédé, ce qui permet d'allouer les ressources de calcul du dispositif d'orchestration ainsi libérées à d'autres traitements.

Dans un autre mode de réalisation, la sous-étape E16 d'agrégation des informations de répartition de fragments du contenu A est mise en œuvre par l'entité de gestion d'un service de livraison de contenus 10. C'est en particulier le cas lorsque l'entité de gestion d'un service de livraison de contenus 10 envoie directement la requête d'obtention de la répartition du contenu A aux ressources physiques 30 et 40. Ces dernières répondent alors directement à l'entité de gestion 10 en lui transmettant leurs informations respectives de répartition de fragments du contenu A.

La **figure 2b** décrit les étapes d'un procédé de gestion selon un mode particulier de réalisation dans lequel le paramètre d'audience est obtenu auprès d'un fournisseur de contenus 50.

Dans ce mode de réalisation, l'étape E2 d'obtention d'un paramètre d'audience ne comporte pas les sous-étapes E21-E27 décrites précédemment, mais une étape E2 de transmission, du fournisseur de contenus 50 à l'entité de gestion 10, d'un paramètre d'audience correspondant à une politique de diffusion des contenus fournis par le fournisseur de contenus 50. Cette politique de diffusion indique par exemple un nombre d'accès estimé ou souhaité par le fournisseur de contenus, pour un contenu A donné, au niveau des ressources physiques du réseau de distribution de contenus 2. De même que décrit précédemment en relation avec la figure 2a, le paramètre d'audience peut également dans ce mode de réalisation être ventilé par ressource physique ou par ressource virtualisée de livraison. Il est ainsi avantageusement possible de promouvoir un contenu au niveau d'une région voisine de la localisation d'une ressource physique, ou encore de prendre en compte des évolutions de popularité d'un contenu extérieures au réseau de distribution de contenus 2.

Les autres étapes sont identiques à celles décrites en relation avec la figure 2a.

La **figure 3** représente des étapes du procédé de gestion relative à la génération d'une commande d'adaptation selon un mode particulier de réalisation. A titre illustratif, on considère ici un contenu A mémorisé au niveau de ressources physiques 30 et 40, tel que décrit précédemment en relation avec les figure la ou 1b. Les étapes relatives à la génération d'une commande d'adaptation sont en outre mise en œuvre par une entité de gestion d'un service de livraison de contenus 10 telle que décrite en relation avec la figure 1b. Cette entité de gestion d'un service de livraison de contenus 10 mémorise en outre une répartition de fragments L1 du contenu A, ainsi que des informations d'audience sous la forme d'une liste L2 du contenu A ventilées par ressource physique, telles que décrites précédemment en relation avec la figure 2a.

Lors d'une étape E31, l'entité de gestion d'un service de livraison de contenus 10 vérifie, à l'aide de la liste L2, s'il y a lieu de déclencher ou non une adaptation des ressources virtualisées de livraison pour le contenu A. L'adaptation des ressources virtualisées de livraison est plus précisément déclenchée en fonction des paramètres d'audience du contenu A au niveau des ressources physiques 30 et 40, tels que fournis dans la liste L2.

Dans un premier cas, l'adaptation des ressources virtualisées de livraison est déclenchée dès qu'un contenu A est jugé « populaire » au niveau d'une ressource physique, c'est-à-dire dès que le paramètre d'audience du contenu A pour une ressource physique dépasse un seuil prédéfini SI de popularité. A titre d'exemple, ce seuil SI est fixé à 100000 accès.

Dans un autre cas, l'adaptation des ressources virtualisées de livraison est déclenchée dès qu'un contenu A est jugé « impopulaire » au niveau d'une ressource physique, c'est-à-dire dès que le paramètre d'audience du contenu A pour une ressource physique est en dessous d'un seuil prédéfini S2 d'impopularité. A titre d'exemple, ce seuil S2 est fixé à 200.

Ainsi, lorsque le nombre d'accès mesuré pour le contenu A au niveau d'une ressource physique est supérieur au seuil SI de popularité, ou dès qu'il est inférieur au seuil S2 d'impopularité, l'entité de gestion d'un service de livraison de contenus 10 déclenche une adaptation correspondante des ressources virtualisées hébergées par cette ressource physique. Lorsque le nombre d'accès mesuré au niveau d'une ressource physique pour un contenu est compris entre les seuils SI et S2, aucune adaptation des ressources virtualisées de livraison n'est déclenchée.

Dans l'exemple envisagé ici, la liste L2 indique en particulier que le contenu A est populaire au niveau de la ressource physique PS1 30 (nombre d'accès = 105000 > S1), mais qu'il est en revanche impopulaire au niveau de la ressource physique PS2 40 (nombre d'accès = 100 < S2).

Lors d'une étape E32 de détermination d'une commande d'adaptation des ressources virtualisées de livraison, l'entité de gestion d'un service de livraison de contenus 10 détermine si la commande d'adaptation des ressources virtualisées de livraison de la ressource physique concernée concerne un contenu populaire ou un contenu impopulaire. Deux situations sont à distinguer : commande d'adaptation pour un contenu populaire (cas du contenu A au niveau de la ressource physique PS1 30) et commande d'adaptation pour un contenu impopulaire (cas du contenu A au niveau de la ressource physique PS2 40).

Dans le premier cas d'une commande C1 d'adaptation pour un contenu populaire au niveau d'une ressource physique, l'adaptation consiste à regrouper sur une même ressource virtualisée de livraison hébergée par cette ressource physique, l'ensemble des fragments de ce contenu mémorisés par les ressources virtualisées de livraison du réseau. L'adaptation du contenu A, populaire au niveau de la ressource physique PS1 30, consiste donc à regrouper l'ensemble des fragments 61-64 sur une même ressource virtualisée de livraison hébergée par la ressource physique PS1 30. Pour cela, lors d'une étape E33, l'entité de gestion d'un service de livraison de contenus 10 détermine à l'aide de la répartition de fragments du contenu A (liste L1 obtenue à l'étape E2), quelles ressources virtualisées de livraison mémorisent des fragments du contenu A. La répartition de fragments du contenu A indique notamment qu'un fragment A1 61 est mémorisé par la ressource virtualisée de livraison VS1 31 hébergée par la ressource physique PS1 30, qu'un deuxième fragment A1 64 est mémorisé par la ressource virtualisée de livraison VS3 41 hébergée par la ressource physique PS2 40, qu'un fragment A2 62 est mémorisé par la ressource virtualisée de livraison VS3 41 hébergée par la ressource physique PS2 40, et qu'un fragment A3 63 est mémorisé par la ressource virtualisée de livraison VS2 32 hébergée par la ressource physique PS1 30.

Lors d'une étape E34, l'entité de gestion d'un service de livraison de contenus 10 détermine, à l'aide de la répartition de fragments du contenu A, quelle est la ressource virtualisée hébergée par la ressource physique PS1 30 qui mémorise le plus de fragments du contenu A. Lorsque plusieurs ressources virtualisées mémorisent un même nombre de fragments du contenu A, une ressource virtualisée cible est sélectionnée aléatoirement parmi celles-ci. Cette ressource virtualisée cible est destinée à héberger l'ensemble des fragments du contenu A localisés dans le réseau de distribution 2 à l'aide de la répartition de fragments du contenu A. Dans l'exemple considéré, la ressource physique PS1 30 hébergeant deux ressources virtualisées 31 et 32 mémorisant chacune un fragment du contenu A, la première ressource virtualisée VS1 31 est sélectionnée de manière aléatoire.

Lors d'une étape E35, l'entité de gestion d'un service de livraison de contenus 10 détermine les opérations d'adaptation à réaliser au niveau de la ressource physique. Ces opérations consistent en l'une des quatre opérations élémentaires suivantes : suppression d'un ou plusieurs fragments d'un contenu mémorisé par une ressource virtualisée de livraison, mémorisation d'un ou plusieurs fragments d'un contenu par une ressource virtualisée de livraison, suppression d'une ressource virtualisée de livraison, création d'une ressource virtualisée de livraison, ou encore en la combinaison d'une ou plusieurs de ces opérations élémentaires. Les opérations d'adaptation concernent ici la ressource physique PS1 30 et forment une commande d'adaptation qui sera ensuite transmise à l'entité de gestion de ressources virtualisées de livraison 20. Les opérations d'adaptation sont en outre destinées à être réalisées séquentiellement selon leur ordre d'ajout à la commande d'adaptation générée lors de l'étape E35.

L'étape E35 comprend un ensemble de sous-étapes E351-E354.

Lors de la sous-étape E351, l'entité de gestion d'un service de livraison de contenus 10 détermine si une nouvelle ressource virtualisée de livraison doit être crée, et s'il convient d'inclure une telle opération de création dans la commande d'adaptation en cours de génération. Une telle opération est à réaliser lorsque la ressource physique à laquelle s'applique la commande d'adaptation des ressources virtualisées de livraison n'héberge aucune ressource virtualisée de livraison mémorisant un quelconque fragment du contenu considéré. Dans l'exemple considéré ici, la ressource physique PS1 30 comprenant deux ressources virtualisées de livraison mémorisant chacune un fragment du contenu A, aucune opération de création d'une ressource virtualisée de livraison n'est ajoutée à la commande d'adaptation en cours de génération lors de cette sous-étape 351.

Lors d'une sous-étape E352, l'entité de gestion d'un service de livraison de contenus 10 détermine s'il convient d'inclure une opération de mémorisation d'un fragment dans la commande d'adaptation en cours de génération. Seuls les fragments du contenu non présents sur la ressource virtualisée cible déterminée lors de l'étape E34 sont à mémoriser sur cette ressource virtualisée cible, ces fragments non présents étant identifiés à l'aide de la répartition de fragments du contenu en question. Dans l'exemple considéré ici, portant sur le contenu A populaire au niveau de la ressource physique PS1 30, deux opérations d'adaptation sont ainsi ajoutées à la commande d'adaptation en cours de génération : mémorisation du fragment A2 62 par la ressource virtualisée VS1 31 à partir de la ressource virtualisée VS3 41, et mémorisation du fragment A3 63 par la ressource virtualisée VS1 31 à partir de la ressource virtualisée VS2 32.

Lors d'une sous-étape E353, l'entité de gestion d'un service de livraison de contenus 10 détermine s'il convient d'inclure une opération de suppression d'un fragment dans la commande d'adaptation en cours de génération. En particulier, tous les fragments du contenu A mémorisés par une ressource virtualisée hébergée par la ressource physique PS1 30 autre que la ressource virtualisée cible VS1 30 sont à supprimer. Ceci permet notamment d'éviter qu'un même fragment ne soit inutilement mémorisé par plusieurs ressources virtualisées de livraison hébergées par une même ressource physique. Les fragments à supprimer sont identifiés à l'aide de la répartition de fragments du contenu en question. Dans l'exemple considéré ici, une opération de suppression est alors ajoutée à la commande d'adaptation en cours de génération : suppression du fragment A3 63 de la ressource virtualisée VS2 32. La ressource virtualisée VS2 32 ne mémorisera alors plus aucun fragment, suite à la réception de la commande d'adaptation.

Enfin dans une sous-étape E354, l'entité de gestion d'un service de livraison de contenus 10 détermine s'il convient d'inclure dans la commande d'adaptation en cours de génération une opération de suppression des ressources virtualisées de livraison hébergées par la ressource physique PS1 30 ne mémorisant plus aucun fragment (tout contenu confondu), ou destinées à ne plus en mémoriser suite aux éventuelles opérations de suppression de fragments incluses dans la commande d'adaptation en cours de génération. Dans l'exemple considéré ici, une opération de suppression de la ressource virtualisée de livraison VS2 32 est ajoutée à la commande d'adaptation, puisque cette ressource virtualisée ne mémorisera plus aucun fragment après la suppression du fragment A3 63 décidée lors de la sous-étape 353.

Cette dernière sous-étape clos la génération de la commande C1 d'adaptation des ressources virtualisées de livraison hébergées par la ressource physique PS1 30. Cette commande C1 d'adaptation peut alors être transmise de l'entité de gestion 10 vers la ressource physique 30, par l'intermédiaire éventuel de l'entité 20, pour que cette ressource physique 30 mette en œuvre les différentes opérations prévues dans cette commande afin d'effectuer l'adaptation des ressources virtualisées qu'elle héberge, comme indiqué en figure 2a ou 2b.

Dans le deuxième cas d'une commande C2 d'adaptation pour un contenu impopulaire au niveau d'une ressource physique, l'adaptation consiste à supprimer tous les fragments de ce contenu mémorisés par des ressources virtualisées de livraison hébergées par cette ressource physique. Dans l'exemple considéré ici, l'adaptation des ressources virtualisées pour le contenu A, impopulaire au niveau de la ressource physique PS2 40, consiste donc à supprimer les fragments A1 62 et A2 64 du contenu A mémorisés par la ressource virtualisée de livraison 41. Pour cela, lors d'une étape E36, deux opérations de suppression d'un fragment respectivement pour les fragments A2 62 et A1 64 mémorisés par la ressource virtualisée de livraison 41, sont ajoutées à la commande C2 d'adaptation en cours de génération.

Puis lors d'une étape E37, les ressources virtualisées ne mémorisant plus de fragments de contenu, ou destinées à ne plus en mémoriser suite aux éventuelles opérations de suppression de fragments incluses dans la commande d'adaptation en cours de génération, sont identifiées, afin d'être supprimées le cas échant. Dans l'exemple considéré, dans la mesure où la ressource virtualisée de livraison 41 ne mémorisera plus aucun fragment après la suppression des fragments A2 62 et A1 64, cela se traduit par l'ajout d'une opération de suppression de la ressource virtualisée de livraison VS3 41 à la commande d'adaptation C2 destinée à la ressource physique PS2 40.

La génération de la commande C2 d'adaptation des ressources virtualisées de livraison hébergées par la ressource physique PS2 40, pour un contenu A impopulaire au niveau de cette ressource physique est alors terminée.

Dans un autre mode de réalisation, lors de l'étape E31 de détermination du déclenchement d'une adaptation des ressources virtualisées de livraison, un unique seuil de popularité peut être défini et utilisé. Dans un tel mode de réalisation, un contenu considéré étant soit populaire soit impopulaire, l'adaptation des ressources virtualisées de livraison est systématiquement déclenchée. Les ressources virtualisées de livraison sont ainsi adaptées en continu en fonction des évolutions de popularité des contenus.

La **figure 4** représente une entité de gestion d'un service de livraison de contenus 10, dans un réseau de distribution de contenus comprenant des ressources physiques aptes à héberger au moins une ressource virtualisée de livraison. Elle comprend notamment :
- un premier module d'émission/réception 100, agencé pour obtenir un paramètre d'audience d'un contenu au niveau d'au moins une des ressources physiques apte à héberger une ressource virtualisée de livraison mémorisant au moins un fragment du contenu ;
- un module de calcul 102, agencé pour générer une commande d'adaptation d'au moins une ressource virtualisée de livraison hébergée par au moins une des ressources physiques en fonction du paramètre d'audience ;
- un module d'émission 104, agencé pour émettre la commande d'adaptation d'au moins une ressource virtualisée de livraison hébergée par au moins une des ressources physiques en fonction du paramètre d'audience, vers la ressource physique en question.

L'entité de gestion d'un service de livraison de contenus 10 comprend en outre une mémoire physique 106 agencée pour mémoriser le paramètre d'audience et la commande d'adaptation.

Dans un mode de réalisation particulier, l'entité de gestion d'un service de livraison de contenus 10 comprend en outre un deuxième module d'émission/réception 108, agencé pour obtenir une répartition de fragments d'un contenu dans le réseau de distribution de contenus. Le module de calcul 102 est alors agencé pour générer la commande d'adaptation d'au moins une ressource virtualisée de livraison hébergée par au moins une des ressources physiques en fonction du paramètre d'audience et de la répartition de fragments.

L'invention est mise en œuvre au moyen de composants logiciels et/ou matériels. Dans cette optique, le terme "module" peut correspondre dans ce document aussi bien à un composant logiciel, qu'à un composant matériel ou à un ensemble de composants matériels et/ou logiciels, apte à mettre en œuvre une fonction ou un ensemble de fonctions, selon ce qui est décrit précédemment pour le module concerné.

Un composant logiciel correspond à un ou plusieurs programmes d'ordinateur, un ou plusieurs sous-programmes d'un programme, ou de manière plus générale à tout élément d'un programme ou d'un logiciel. Un tel composant logiciel est stocké en mémoire puis chargé et exécuté par un processeur de données d'une entité physique et est susceptible d'accéder aux ressources matérielles de cette entité physique (mémoires, supports d'enregistrement, bus de communication, cartes électroniques d'entrées/sorties, interfaces utilisateur, etc).

De la même manière, un composant matériel correspond à tout élément d'un ensemble matériel (ou hardware). Il peut s'agir d'un composant matériel programmable ou non, avec ou sans processeur intégré pour l'exécution de logiciel. Il s'agit par exemple d'un circuit intégré, d'une carte à puce, d'une carte électronique pour l'exécution d'un micrologiciel (firmware), etc.

Dans un mode de réalisation particulier, les modules 100, 102, 104, 106 et 108 sont agencés pour mettre en œuvre le procédé de gestion précédemment décrit. Il s'agit de préférence de modules logiciels comprenant des instructions logicielles pour faire exécuter celles des étapes du procédé de gestion précédemment décrit, mises en œuvre par une entité de gestion d'un service de livraison de contenus. L'invention concerne donc aussi :
- un programme pour une entité de gestion d'un service de livraison de contenus, comprenant des instructions de code de programme destinées à commander l'exécution des étapes du procédé de gestion précédemment décrit, lorsque ledit programme est exécuté par ladite une entité de gestion d'un service de livraison de contenus ;
- un support d'enregistrement lisible par une entité de gestion d'un service de livraison de contenus sur laquelle est enregistré le programme pour une entité de gestion d'un service de livraison de contenus.

Les modules logiciels peuvent être stockés dans ou transmis par un support de données. Celui-ci peut être un support matériel de stockage, par exemple un CD-ROM, une disquette magnétique ou un disque dur, ou bien un support de transmission tel qu'un signal électrique, optique ou radio, ou un réseau de télécommunication.

## Revendications

1. Procédé de gestion de contenus dans un réseau de distribution de contenus (2) comprenant des ressources physiques (30, 40) aptes à héberger au moins une ressource virtualisée de livraison (31, 32, 41), chacun des contenus découpé en plusieurs fragments et la ressource virtualisée de livraison adaptée à mémoriser au moins un desdits fragments (61-64, 71) desdits contenus, ledit procédé comprenant les étapes suivantes mises en œuvre par une entité de gestion d'un service de livraison de contenus (10) :
- obtention (E1) d'une répartition de fragments de contenus dans ledit réseau de distribution de contenus
- obtention (E2) d'un paramètre d'audience d'un contenu au niveau d'au moins une desdites ressources physiques apte à héberger une ressource virtualisée de livraison;
- émission (E4) d'une commande d'adaptation d'au moins une ressource virtualisée de livraison hébergée par au moins une desdites ressources physiques en fonction dudit paramètre d'audience et de ladite répartition de fragments, la commande d'adaptation comprenant une opération soit de suppression ou de création de ladite ressource virtualisée soit de suppression ou de mémorisation d'un ou plusieurs fragments d'un contenu dans ladite ressource virtualisée de livraison.

2. Procédé de gestion selon la revendication 1, dans lequel le paramètre d'audience est obtenu auprès d'une entité de gestion des ressources virtualisées de livraison (20) hébergées par les ressources physiques du réseau.

3. Procédé de gestion selon la revendication 1, dans lequel le paramètre d'audience est directement obtenu auprès des ressources virtualisées de livraison.

4. Procédé de gestion selon la revendication 1 à 3, dans lequel le paramètre d'audience correspond à une politique de diffusion dudit contenu déterminée par le fournisseur du contenu et/ou l'opérateur du réseau de distribution de contenus.

5. Procédé de gestion selon l'une des revendications 1 à 4, dans lequel l'émission de ladite commande d'adaptation est à destination d'une entité de gestion (20) des ressources virtualisées de livraison hébergées par les ressources physiques du réseau, ladite entité de gestion (20) émettant (E42, E44) au moins une commande d'adaptation vers ladite au moins une ressource physique hébergeant une ressource virtualisée identifiée dans la commande d'adaptation.

6. Procédé de gestion selon l'une des revendications 1 à 5, dans lequel le paramètre d'audience est relatif à un nombre d'accès audit contenu, l'adaptation de ladite au moins une ressource virtualisée comprenant la mémorisation par une ressource virtualisée d'un ensemble de fragments dudit contenu lorsque ledit paramètre d'audience indique un nombre d'accès audit contenu supérieur à un seuil de popularité.

7. Procédé de gestion selon la revendication 6, dans lequel lorsqu'un fragment dudit ensemble de fragments du contenu est mémorisé par une autre ressource virtualisée de livraison, l'adaptation comprend la suppression dudit fragment sur l'autre ressource virtualisée de livraison.

8. Procédé de gestion selon la revendication 7, dans lequel la commande d'adaptation identifiant une ressource physique n'hébergeant pas de ressource virtualisée mémorisant un fragment du contenu, l'adaptation de ladite ressource virtualisée comprend en outre la création d'une ressource virtualisée hébergée par ladite ressource physique, ladite ressource virtualisée mémorisant l'ensemble de fragments dudit contenu.

9. Procédé de gestion selon la revendication 1, dans lequel le paramètre d'audience est relatif à un nombre d'accès audit contenu, l'adaptation de ladite ressource virtualisée consistant en la suppression des fragments du contenu mémorisés sur ladite ressource virtualisée lorsque ledit paramètre d'audience indique un nombre d'accès audit contenu inférieur à un seuil d'impopularité.

10. Entité de gestion d'un service de livraison de contenus (10), dans un réseau de distribution de contenus comprenant des ressources physiques aptes à héberger au moins une ressource virtualisée de livraison, chacun des contenus découpé en plusieurs fragments et la ressource virtualisée de livraison adaptée à mémoriser au moins un desdits fragments (61-64, 71) desdits contenus,
ladite entité comprenant :
- un premier module d'émission/réception (100), agencé pour obtenir un paramètre d'audience d'un contenu au niveau d'une desdites ressources physiques apte à héberger une ressource virtualisée de livraison;
- un deuxième module d'émission/réception (108), agencé pour obtenir une répartition de fragments de contenus dans ledit réseau de distribution de contenus ;
- un module de calcul (102), agencé pour générer une commande d'adaptation d'au moins une ressource virtualisée de livraison hébergée par au moins une desdites ressources physiques en fonction dudit paramètre d'audience ;
- un module d'émission (104), agencé pour émettre la commande d'adaptation d'au moins une ressource virtualisée de livraison hébergée par au moins une desdites ressources physiques en fonction dudit paramètre d'audience et de ladite répartition de fragments, la commande d'adaptation dépendant de ladite répartition de fragments et comprenant une opération soit de suppression ou de création de ladite ressource virtualisée. virtualisée soit de suppression ou de mémorisation d'un ou plusieurs fragments d'un contenu dans ladite ressource virtualisée de livraison.

11. Système de gestion de contenus (1), dans un réseau de distribution de contenus comprenant des ressources physiques aptes à héberger au moins une ressource virtualisée de livraison, ledit système comprenant :
- une entité de gestion d'un service de livraison de contenus (10) selon la revendication 10 ;
- une entité de gestion des ressources virtualisées de livraison (20) hébergées par les ressources physiques du réseau comprenant un module d'émission/réception, agencé pour envoyer un paramètre d'audience à l'entité de gestion d'un service de livraison de contenus et pour recevoir une commande d'adaptation d'au moins une ressource virtualisée de livraison hébergée par au moins une des ressources physiques, la commande d'adaptation comprenant une opération de suppression ou de création de ladite ressource virtualisée.

12. Programme pour une entité de gestion d'un service de livraison de contenus, comprenant des instructions de code de programme destinées à commander l'exécution des étapes du procédé selon l'une des revendications 1 à 9, lorsque ledit programme est exécuté par ladite entité.

13. Support d'enregistrement lisible par ordinateur sur lequel est enregistré un programme d'ordinateur comprenant des instructions de code de programme pour l'exécution des étapes du procédé selon l'une des revendications 1 à 9.

## Patentansprüche

1. Verfahren zur Verwaltung von Inhalten in einem Inhaltsverteilungsnetzwerk (2), das physikalische Ressourcen (30, 40) enthält, die mindestens eine virtualisierte Lieferressource (31, 32, 41) hosten können, wobei jeder der Inhalte in mehrere Fragmente zerlegt und die virtualisierte Lieferressource geeignet ist, mindestens eines der Fragmente (61-64, 71) der Inhalte zu speichern,
wobei das Verfahren die folgenden Schritte enthält, die von einer Verwaltungsentität (10) eines Inhaltslieferungsdiensts durchgeführt werden:
- Erhalt (E1) einer Verteilung von Inhaltsfragmenten in dem Inhaltsverteilungsnetzwerk;
- Erhalt (E2) eines Besucherparameters eines Inhalts im Bereich mindestens einer der physikalischen Ressourcen, die eine virtualisierte Lieferressource hosten kann;
- Senden (E4) eines Anpassungsbefehls mindestens einer von mindestens einer der physikalischen Ressourcen gehosteten virtualisierten Lieferressource abhängig vom Besucherparameter und von der Verteilung von Fragmenten, wobei der Anpassungsbefehl einen Vorgang entweder des Löschens oder des Erzeugens der virtualisierte Ressource oder des Löschens oder des Speicherns eines oder mehrerer Fragmente eines Inhalts in der virtualisierten Lieferressource enthält.

2. Verwaltungsverfahren nach Anspruch 1, wobei der Besucherparameter bei einer Verwaltungsentität (20) der von den physikalischen Ressourcen gehosteten virtualisierten Lieferressourcen erhalten wird.

3. Verwaltungsverfahren nach Anspruch 1, wobei der Besucherparameter direkt bei den virtualisierten Lieferressourcen erhalten wird.

4. Verwaltungsverfahren nach Anspruch 1 bis 3, wobei der Besucherparameter einer vom Anbieter des Inhalts und/oder vom Betreiber des Inhaltsverteilungsnetzwerks bestimmten Politik der Aussendung des Inhalts entspricht.

5. Verwaltungsverfahren nach einem der Ansprüche 1 bis 4, wobei das Senden des Anpassungsbefehls an eine Verwaltungsentität (20) der von den physikalischen Ressourcen des Netzes gehosteten virtualisierten Lieferressourcen gerichtet ist, wobei die Verwaltungsentität (20) mindestens einen Anpassungsbefehl an die mindestens eine physikalische Ressource sendet (E42, E44), die eine im Anpassungsbefehl erkannte virtualisierte Ressource hostet.

6. Verwaltungsverfahren nach einem der Ansprüche 1 bis 5, wobei der Besucherparameter sich auf eine Anzahl von Zugriffen auf den Inhalt bezieht, wobei die Anpassung der mindestens einen virtualisierten Ressource das Speichern durch eine virtualisierte Ressource einer Gruppe von Fragmenten des Inhalts enthält, wenn der Besucherparameter eine Anzahl von Zugriffen auf den Inhalt anzeigt, die größer ist als eine Beliebtheitsschwelle.

7. Verwaltungsverfahren nach Anspruch 6, wobei, wenn ein Fragment der Gruppe von Fragmenten des Inhalts von einer anderen virtualisierten Lieferressource gespeichert ist, die Anpassung das Löschen des Fragments in der anderen virtualisierten Lieferressource enthält.

8. Verwaltungsverfahren nach Anspruch 7, wobei, wenn der Anpassungsbefehl eine physikalische Ressource erkennt, die keine ein Fragment des Inhalts speichernde virtualisierte Ressource hostet, die Anpassung der virtualisierten Ressource außerdem die Erzeugung einer von der physikalischen Ressource gehosteten virtualisierten Ressource enthält, wobei die virtualisierte Ressource die Gruppe von Fragmenten des Inhalts speichert.

9. Verwaltungsverfahren nach Anspruch 1, wobei der Besucherparameter sich auf eine Anzahl von Zugriffen auf den Inhalt bezieht, wobei die Anpassung der virtualisierten Ressource im Löschen der in der virtualisierten Ressource gespeicherten Fragmente des Inhalts besteht, wenn der Besucherparameter eine Anzahl von Zugriffen auf den Inhalt niedriger als eine Unbeliebtheitsschwelle anzeigt.

10. Verwaltungsentität (10) eines Inhaltslieferungsdiensts in einem Inhaltsverteilungsnetzwerk, das physikalische Ressourcen enthält, die mindestens eine virtualisierte Lieferressource hosten können, wobei jeder der Inhalte in mehrere Fragmente zerlegt und die virtualisierte Lieferressource geeignet ist, mindestens eines der Fragmente (61-64, 71) der Inhalte zu speichern,
wobei die Entität enthält:
- ein erstes Sende-/Empfangsmodul (100), das eingerichtet ist, um einen Besucherparameter eines Inhalts im Bereich einer der physikalischen Ressourcen zu erhalten, die eine virtualisierte Lieferressource hosten kann;
- ein zweites Sende-/Empfangsmodul (108), das eingerichtet ist, um eine Verteilung von Fragmenten von Inhalten im Inhaltsverteilungsnetzwerk zu erhalten;
- ein Rechenmodul (102), das eingerichtet ist, um einen Anpassungsbefehl mindestens einer von mindestens einer der physikalischen Ressourcen gehosteten virtualisierten Lieferressource abhängig vom Besucherparameter zu generieren;
- ein Sendemodul (104), das eingerichtet ist, um den Anpassungsbefehl mindestens einer von mindestens einer der physikalischen Ressourcen gehosteten virtualisierten Lieferressource abhängig vom Besucherparameter und von der Verteilung von Fragmenten zu senden, wobei der Anpassungsbefehl von der Verteilung von Fragmenten abhängt und einen Vorgang entweder des Löschens oder des Erzeugens der virtualisierten Ressource enthält, oder des Löschens oder Speicherns eines oder mehrerer Fragmente eines Inhalts in der virtualisierten Lieferressource enthält.

11. System (1) zur Verwaltung von Inhalten in einem Inhaltsverteilungsnetzwerk, das physikalische Ressourcen enthält, die mindestens eine virtualisierte Lieferressource hosten können, wobei das System enthält:
- eine Verwaltungsentität (10) eines Inhaltslieferungsdiensts nach Anspruch 10;
- eine Verwaltungsentität (20) der von den physikalischen Ressourcen des Netzes gehosteten virtualisierten Lieferressourcen, die ein Sende-/Empfangsmodul enthält, das eingerichtet ist, um einen Besucherparameter an die Verwaltungsentität eines Inhaltslieferungsdiensts zu senden und um einen Anpassungsbefehl mindestens einer virtualisierten Lieferressource zu empfangen, die von mindestens einer der physikalischen Ressourcen gehostet wird, wobei der Anpassungsbefehl einen Vorgang des Löschens oder Erzeugens der virtualisierten Ressource enthält.

12. Programm für eine Verwaltungsentität eines Inhaltslieferungsdiensts, das Programmcodeanweisungen enthält, die dazu bestimmt sind, die Ausführung der Schritte des Verfahrens nach einem der Ansprüche 1 bis 9 zu steuern, wenn das Programm von der Entität ausgeführt wird.

13. Computerlesbarer Aufzeichnungsträger, auf dem ein Computerprogramm aufgezeichnet ist, das Programmcodeanweisungen zur Ausführung der Schritte des Verfahrens nach einem der Ansprüche 1 bis 9 enthält.

## Claims

1. Method for managing items of content in a content delivery network (2) comprising physical resources (30, 40) able to host at least one virtualized delivery resource (31, 32, 41), each of the items of content being divided into a plurality of fragments and the virtualized delivery resource being designed to store at least one of said fragments (61-64, 71) of said items of content,
said method comprising the following steps implemented by an entity (10) for managing a content delivery service;
- obtaining (E1) a distribution of fragments of items of content in said content delivery network,
- obtaining (E2) an audience parameter of an item of content on at least one of said physical resources able to host a virtualized delivery resource;
- transmitting (E4) a command to adapt at least one virtualized delivery resource hosted by at least one of said physical resources depending on said audience parameter and on said distribution of fragments, the adaptation command comprising an operation either of deleting or creating said virtualized resource or of deleting or storing one or more fragments of an item of content in said virtualized delivery resource.

2. Management method according to Claim 1, wherein the audience parameter is obtained from an entity (20) for managing the virtualized delivery resources hosted by the physical resources of the network.

3. Management method according to Claim 1, wherein the audience parameter is obtained directly from the virtualized delivery resources.

4. Management method according to Claim 1 to 3, wherein the audience parameter corresponds to a policy for broadcasting said item of content, determined by the content provider and/or the operator of the content delivery network.

5. Management method according to one of Claims 1 to 4, wherein the transmission of said adaptation command is to an entity (20) for managing the virtualized delivery resources hosted by the physical resources of the network, said management entity (20) transmitting (E42, E44) at least one adaptation command to said at least one physical resource hosting a virtualized resource identified in the adaptation command.

6. Management method according to one of Claims 1 to 5, wherein the audience parameter relates to a number of access operations to said item of content, the adaptation of said at least one virtualized resource comprising storage of a set of fragments of said item of content by a virtualized resource when said audience parameter indicates a number of access operations to said item of content greater than a popularity threshold.

7. Management method according to Claim 6, wherein, when a fragment of said set of fragments of the item of content is stored by another virtualized delivery resource, the adaptation comprises deleting said fragment on the other virtualized delivery resource.

8. Management method according to Claim 7, wherein, with the adaptation command identifying a physical resource not hosting a virtualized resource storing a fragment of the item of content, the adaptation of said virtualized resource furthermore comprises creating a virtualized resource hosted by said physical resource, said virtualized resource storing the set of fragments of said item of content.

9. Management method according to Claim 1, wherein the audience parameter relates to a number of access operations to said item of content, the adaptation of said virtualized resource consisting in deleting the fragments of the item of content that are stored on said virtualized resource when said audience parameter indicates of number of access operations to said item of content lower than an unpopularity threshold.

10. Entity (10) for managing a content delivery service, in a content delivery network comprising physical resources able to host at least one virtualized delivery resource, each of the items of content being divided into a plurality of fragments and the virtualized delivery resource being designed to store at least one of said fragments (61-64, 71) of said items of content,
said entity comprising:
- a first transceiver module (100), designed to obtain an audience parameter of an item of content on one of said physical resources able to host a virtualized delivery resource;
- a second transceiver module (108), designed to obtain a distribution of fragments of items of content in said content delivery network;
- a computing module (102), designed to generate a command to adapt at least one virtualized delivery resource hosted by at least one of said physical resources depending on said audience parameter;
- a transmission module (104), designed to transmit the command to adapt at least one virtualized delivery resource hosted by at least one of said physical resources depending on said audience parameter and on said distribution of fragments, the adaptation command depending on said distribution of fragments and comprising an operation either of deleting or creating said virtualized resource or of deleting or storing one or more fragments of an item of content in said virtualized delivery resource.

11. Content management system (1) for managing items of content in a content delivery network comprising physical resources able to host at least one virtualized delivery resource, said system comprising:
- an entity (10) for managing a content delivery service according to Claim 10;
- an entity (20) for managing the virtualized delivery resources hosted by the physical resources of the network, comprising a transceiver module, designed to send an audience parameter to the entity for managing a content delivery service and to receive a command to adapt at least one virtualized delivery resource hosted by at least one of the physical resources, the adaptation command comprising an operation of deleting or creating said virtualized resource.

12. Program for an entity for managing a content delivery service, comprising program code instructions intended to command the execution of the steps of the method according to one of Claims 1 to 9 when said program is executed by said entity.

13. Computer-readable recording medium on which there is recorded a computer program comprising program code instructions for the execution of the steps of the method according to one of Claims 1 to 9.
